# EUROPEAN PATENT APPLICATION

(11) **EP 4 811 244 A1**
(43) Date of publication of application: **23.09.2026**
(21) Application number: 26164895.0
(22) Date of filing: 16.03.2026
(51) Int. Cl.: G06Q 10/08, G06Q 10/087, G01G 19/414

(54) **PRODUCT PROCESSING APPARATUS**

(30) Priority: 18.03.2025 JP 2025043346
(71) Applicant: Ishida Co., Ltd., Kyoto 606-8392 (JP)
(72) Inventor: FUNATSU, Satoshi, Ritto-shi, Shiga, 520-3026 (JP)
(74) Representative: Global IP Europe Patentanwaltskanzlei

(57) **Abstract**

[Problem] Provided is a product processing apparatus(1) capable of efficiently acquiring product information stored in a product master even when an image recognition device(30) is introduced.

[Solving method] A product processing apparatus(1) includes a control section(10) configured to acquire, from a product master, product information of a product identified by a retrieval operation of the product or a product identified by an image recognition device(30) and display the product information on a display section(5). The control section(10) activates the image recognition device(30) when a retrieval operation in which the product is not identified is performed.

## Description

### Technical Field

An aspect of the present invention relates to a product processing apparatus.

### Background Art

A product processing apparatus such as a weighing label producing apparatus that weighs a product and produces a product label is known. As such a product processing apparatus, for example, JP 2024-41228 A discloses a label producing apparatus that captures an image of a product, identifies the product by reading a feature amount of the captured image of the product, retrieves information of the identified product from a product master, and prints the information on a label. Recently, it is becoming common to identify a product using an image recognition device based on artificial intelligence (AI).

### Citation List

### Patent Literature

Patent Document 1: JP 2024-41228 A

### Summary of Invention

### Technical Problem

When the product information of the product is retrieved from the product master using the image recognition device and displayed on a display section, there are cases where a target product can be identified with high accuracy, and cases where a target product cannot be identified with high accuracy. For example, the image recognition device can identify uniformly shaped products with high accuracy, but cannot identify non-uniformly shaped products with high accuracy (for example, prepared foods or the like in which ingredients vary seasonally or the surfaces of arranged ingredients change each time). Thus, it takes a considerable amount of time to narrow down such products to a price-labeling target product.

Further, when a plurality of products are identified by the image recognition device, a list of the plurality of products is displayed on the display section, and a corresponding product is selected from the list. However, it is troublesome to repeat such an operation every time, and there is a problem in that a price-labeling operation for products is also delayed. Moreover, in the case of a conventional image recognition device, once the image recognition device is introduced into a work site, the recognition accuracy for products cannot be improved. Therefore, there is a problem in that the introduction of the image recognition device cannot make a price-labeling operation efficient.

An object of an aspect of the present invention is to provide a product processing apparatus capable of efficiently acquiring product information stored in a product master even when an image recognition device is introduced.

### Solution to Problem

(1) A product processing apparatus includes a control section configured to acquire, from a product master, product information of a product identified by a retrieval operation of the product or a product identified by an image recognition device and display the product information on a display section, wherein the control section activates the image recognition device when a retrieval operation in which the product is not identified is performed.

In the product processing apparatus having this configuration, when it is quicker and easier to retrieve the product information by inputting a retrieval number for identifying the product, the retrieval operation of the product is performed. For example, the retrieval number unique to the product is input and then a retrieval key is pressed. Then, the control section acquires the product information of the product corresponding to the retrieval number from the product master and displays the product information on the display section. However, when the operator does not remember the retrieval number or when the retrieval number is unknown, it takes time to search for the retrieval number, and thus the retrieval operation in which the product is not identified is performed. For example, a number not associated with any product, e.g., zero, is pressed, and then the retrieval key is pressed. Alternatively, only the retrieval key is pressed. Then, the control section determines that the retrieval operation is an operation in which the product is not identified, and activates the image recognition device. Accordingly, the image recognition device identifies the product from image data of the product, acquires the product information of the identified product from the product master, and displays the product information on the display section. In this way, when the operator can display the product information more quickly and easily by the retrieval operation of the product, the operator performs the retrieval operation as before. Otherwise, the image recognition device is activated to display the product information of the identified product, which can make a price-labeling operation efficient. In addition, even when the retrieval number of a product is remembered, the image recognition device may be operated by intentionally operating only the retrieval key without inputting the retrieval number. In this case, it is possible to check whether or not the image recognition device can identify a correct product name.

(2) The product processing apparatus according to (1) above may further include an audio output device configured to read out at least a product name included in the product information when the product information related to the product is displayed on the display section. With this configuration, when the product information is displayed by the retrieval operation of the product, the displayed product name is read out, and thus the operator can check whether or not the retrieval operation is correct. In addition, when the product is identified by the image recognition device and the product information is displayed, the operator can also check whether or not the identification of the product by the image recognition device is correct.

(3) In the product processing apparatus according to (2) above, when a plurality of the products are identified by the image recognition device, the control section may display the plurality of identified products on the display section, and when one product is selected from the plurality of displayed products, the control section may display product information of the selected product on the display section. With this configuration, when the image recognition device identifies the plurality of products, the one corresponding product can be selected from the plurality of products. Thus, even when the recognition accuracy of the image recognition device is low, it can be compensated for by the product selection operation.

(4) The product processing apparatus according to any of (1) to (3) may further include a weighing section configured to weigh the product, and a label producing section configured to produce a label printed with a weight of the product weighed by the weighing section and the product information of the product acquired from the product master and produce the label. With this configuration, the price label on which the weight of the product is printed can be produced, which enables a price-labeling operation of affixing the price label to the product.

(5) The product processing apparatus according to claim 1 or 2 may further include an imaging section configured to image the product, wherein the control section may provide the image recognition device with, as training data, image data of the product imaged by the imaging section and a product name of the product identified by the retrieval operation of the product or a product name of the product identified by the image recognition device and cause the image recognition device to perform machine learning. With this configuration, the image recognition device performs the machine learning based on the training data, and thus it is possible to improve the recognition accuracy of the image recognition device. Therefore, even when the recognition accuracy of the image recognition device is low, repeating the machine learning can improve the recognition accuracy and make the price-labeling operation efficient.

### Advantageous Effects of Invention

According to an aspect of the present invention, even when an image recognition device is introduced, it is possible to efficiently acquire product information stored in a product master.

### Brief Description of Drawings

FIG. 1 is a perspective view illustrating a weighing label producing apparatus according to an embodiment.
FIG. 2 is a block diagram of the weighing label producing apparatus of FIG. 1.
FIG. 3 is an example of an initial display of a product information screen displayed on a display section.
FIG. 4 is an example of a product recognition dialog displayed on the display section.
FIG. 5(A) is an example of the product information screen displayed on the display section.
FIG. 5(B) is an example of a product label produced by the weighing label producing apparatus of FIG. 1.
FIG. 6(A) is an example of a product selection dialog displayed on the display section.
FIG. 6(B) is an example of the product information screen displayed on the display section.
FIG. 7 is an example of an operation flow of the weighing label producing apparatus including an image recognition section.
FIG. 8 is an example of the product information screen displayed on the display section.
FIG. 9 is an example of a product master display screen displayed on the display section.
FIG. 10(A) is a perspective view illustrating a weighing, packaging, and price-labeling apparatus including a weighing label producing apparatus according to a modification.
FIG. 10(B) is a perspective view illustrating a face-to-face weighing label producing apparatus according to a modification.

### Description of Embodiments

Hereinafter, a weighing label producing apparatus 1 according to an embodiment of a product processing apparatus will be described with reference to the drawings. The weighing label producing apparatus 1 is an apparatus in which a weighing apparatus and a label producing apparatus are integrated, but may be a label producing apparatus not equipped with a weighing apparatus. In this case, a placement section on which a product is placed and an imaging section that images the product on the placement section are added. In the description below, the same elements are denoted by the same reference signs, and redundant description thereof is omitted. In addition, "A or B" in the present specification is only required to include any one of A or B, and does not exclude a case where both A and B are included.

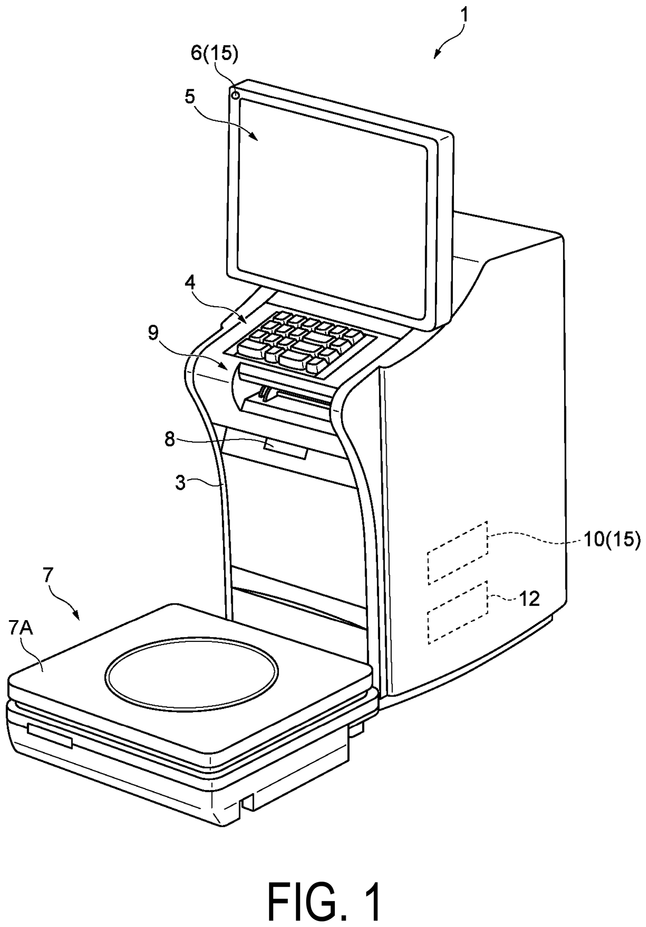

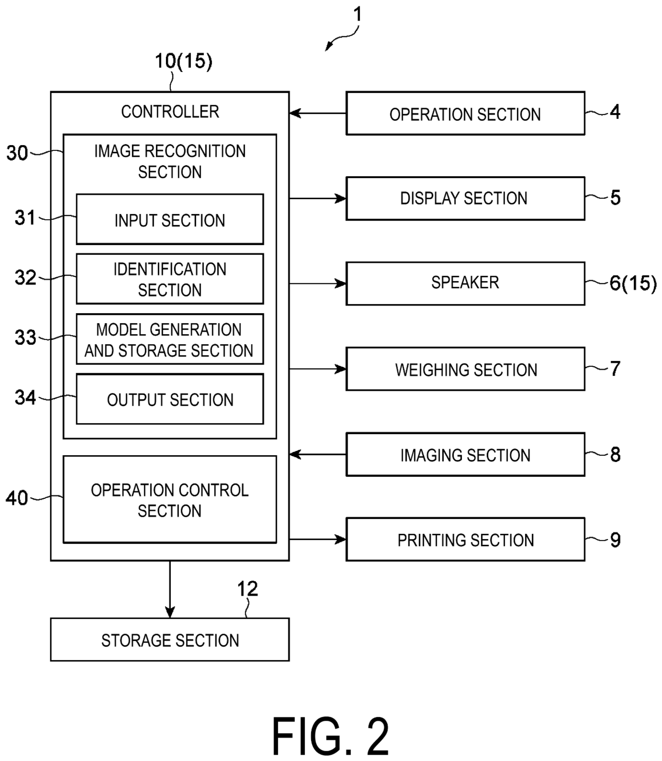

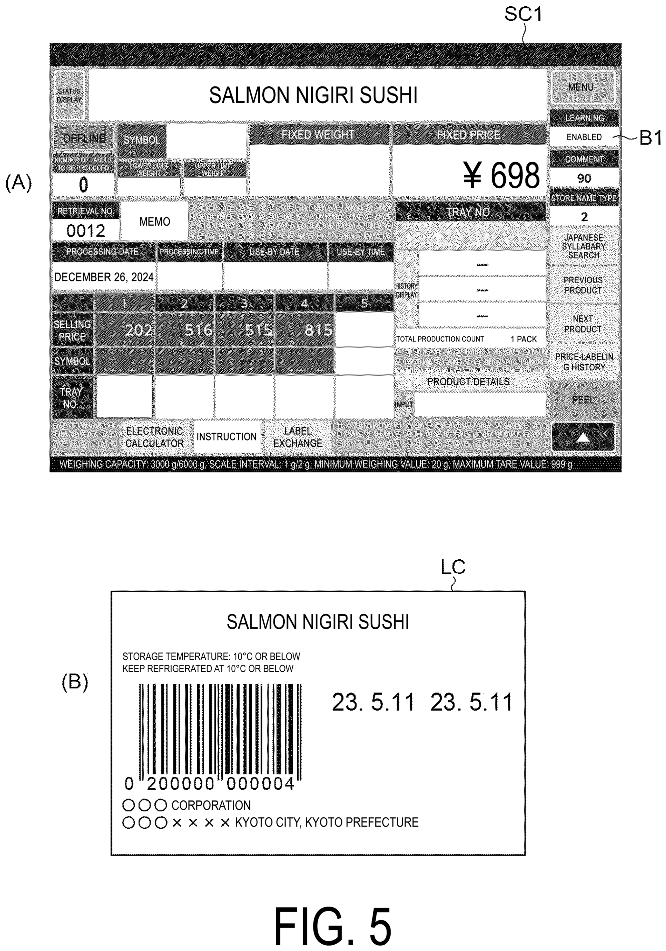

The weighing label producing apparatus 1 has a function of weighing a product and producing a product label LC (see FIG. 5(B)) to be affixed to the weighed product. The weighing label producing apparatus 1 of the present embodiment is configured to acquire, from a storage section 12, product information of a product identified by a retrieval operation of the product or by image recognition by an image recognition section (image recognition device) 30, and display the product information on a display section 5. As illustrated in FIGS. 1 and 2, the weighing label producing apparatus 1 includes a main body case 3, an operation section 4 including fixed keys, the display section 5, a speaker 6, a weighing section 7, an imaging section 8, a printing section 9, the storage section 12, and a controller (control section) 10.

The weighing label producing apparatus 1 includes the image recognition section 30 built therein, but the image recognition section 30 may be separated from the weighing label producing apparatus 1 and constituted by a computer equipped with an AI, and the computer and the weighing label producing apparatus 1 may be connected to each other. In this case, only communication between both apparatuses is additionally performed, and thus a case where the image recognition section 30 and the weighing label producing apparatus 1 are integrated, which does not require this communication operation, will be described below.

The main body case 3 is provided with the operation section 4, the display section 5, the speaker 6, the printing section 9, and the controller 10. The main body case 3 is formed in a substantially rectangular parallelepiped shape. An opening/closing door is provided at a front surface of the main body case 3. When the opening/closing door is opened, the printing section 9 disposed inside the main body case 3 is exposed.

The operation section 4 is provided at the main body case 3. The operation section 4 is a section that receives various operations from an operator. The operation section 4 includes a "unit price" key, a "fixed price" key, a "tare" key, a "print" key, a "retrieval" key, numeric keys, and the like necessary for a price calculating scale.

The display section 5 displays various types of information such as information on the state and operation of the weighing label producing apparatus 1 and a product to be weighed. The display section 5 may include a touch panel. In this case, the display section 5 exhibits a function of receiving various operations from the operator, in a manner similar to the operation section 4.

The speaker 6 is provided near the display section 5. The speaker 6 may be provided at another position, or may be provided as an external speaker separate from the main body case 3. The speaker 6 outputs (reads out), via audio, a part of information including at least a product name in product information. The timing, the output content, and the like of the audio output from the speaker 6 are controlled by the controller 10. The output content mentioned here means content emitted from the speaker 6, such as a product name. The speaker 6 and the controller 10 of the present embodiment constitute an audio output device 15.

The weighing section 7 is configured as a separate body from the main body case 3. Therefore, the label producing apparatus 1 may be a simple label producing apparatus (product processing apparatus) not including the weighing section 7. The weighing section 7 mainly includes a weighing pan 7A, and a load cell, a signal processing circuit, and a transmission module, which are not illustrated. The load cell is provided below the weighing pan 7A and supports the weighing pan 7A, and converts mechanical strain generated by placing an object to be weighed on the weighing pan 7A into an electric signal and outputs the electric signal. The signal processing circuit amplifies the electric signal output from the load cell and converts the electric signal into a digital signal. The transmission module transmits the digital signal to the controller 10 in the main body case 3 in a wireless or wired manner.

The imaging section 8 images a product. The imaging section 8 is provided at the main body case 3 so as to be able to image the entire weighing pan 7A. When the product is placed on the weighing pan 7A, the imaging section 8 images the product and generates imaging information. The imaging section 8 is, for example, a CCD image sensor, a CMOS image sensor, or the like that acquires a color image. The imaging section 8 may include a stereo camera, an infrared camera, or the like that acquires a temperature image of the product. The imaging section 8 outputs the imaging information to the controller 10. In the case of the simple label producing apparatus not including the weighing section 7, a placement section on which the product is placed is separately provided instead of the weighing section 7.

The printing section 9 is housed in the main body case 3, and includes a cassette, a printing unit, and a cutter unit, which are not illustrated. The cassette detachably supports a label roll. The label roll is formed in a roll shape by winding a strip-shaped linerless label around a paper core. In the linerless label (hereinafter, simply referred to as a "label"), an adhesive is applied to a back surface of paper as a base material, a heat-sensitive agent that develops color by heat is applied to a front surface, and a silicone resin as a release agent is further applied thereon. The label roll is wound around the paper core with the back surface (adhesion surface) of the label facing inside. In the present embodiment, a label roll in which a label with a liner is wound may be used instead of the linerless label. The printing section 9 prints product information on the label and produces the label as a product label LC.

The printing unit includes a printing head and a platen roller, and prints the product information on the front surface of the label. The printing head is constituted by a thermal printing head. The printing head is controlled by the controller 10, which will be described in detail below. The platen roller presses the label from the back side to press the front surface of the label against the printing head. The cutter unit cuts off the label fed from the printing unit as a product label LC (see FIG. 5(B)) having a predetermined length. That is, the cutter unit produces, as the product label LC, a portion on which the product information is printed by the printing head. The printing method of the printing section 9 is a mere example, and various printing methods such as a thermal transfer method of pressing an ink ribbon against plain paper, an ink jet method, and the like can be used.

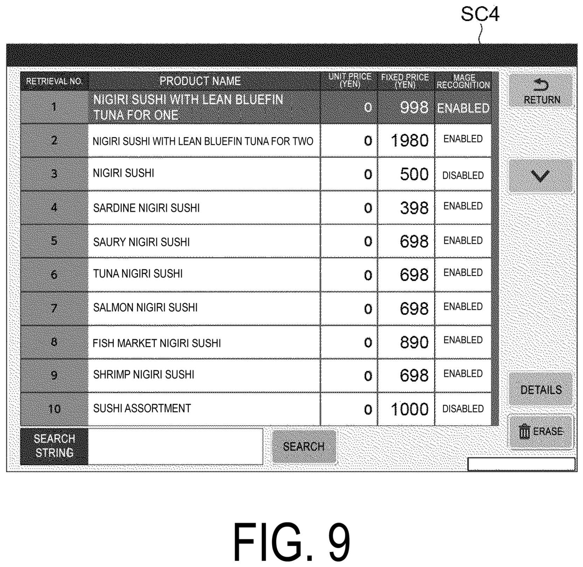

The storage section 12 stores various types of information. The storage section 12 is constituted by, for example, a RAM, a solid state drive (SSD), a hard disk drive (HDD), or the like. The storage section 12 of the present embodiment stores product information for each product as a product master. The product information includes a retrieval number (retrieval No.) of the product, a product name for identifying the product, a raw material name, a content volume, a processing date/manufacturing date, a use-by date/best before date, a storage temperature, a processing entity/manufacturer, and the like. In the product master, in addition to the above-described product information as illustrated in a product master display screen SC4 of FIG. 9, information as to whether or not to cause the image recognition section (image recognizing device) 30 described below to perform machine learning is stored for each product.

The controller 10 is a section that controls the weighing label producing apparatus 1 and includes a central processing unit (CPU), a read only memory (ROM), a random access memory (RAM), and the like, and they are mutually connected via bus lines such as an address bus and a data bus. The controller 10 can be configured as software in which a program stored in the ROM is loaded onto the RAM and executed by the CPU. The controller 10 may be configured as hardware with an electronic circuit or the like. The controller 10 includes an image recognition section 30 including an input section 31, an identification section 32, a model generation and storage section 33, and an output section 34, and an operation control section 40 as functional components. For example, the image recognition section 30 and the operation control section 40 may be configured as software in which a program stored in the ROM is loaded onto the RAM and executed by the CPU.

The input section 31 inputs image data output from the imaging section 8 to the identification section 32. The data input to the identification section 32 may be data obtained by cutting out only a region corresponding to a product (product or product and the periphery thereof) from the image data output from the imaging section 8. The input section 31 receives a trained model transmitted from a server device or a computer equipped with an AI, which is not illustrated, and stores the trained model in the model generation and storage section 33.

The model generation and storage section 33 stores the trained model generated by the external AI, performs machine learning based on training data input from the operation control section 40, and stores a newly generated trained model.

The identification section 32 identifies, using the trained model acquired from the model generation and storage section 33, the product name of the product from the image data of the product imaged by the imaging section 8. The identification section 32 detects that the product is placed on the weighing pan 7A based on the image data input from the input section 31. Specifically, the identification section 32 detects that the product is placed based on a difference (background difference) between the image data input from the input section 31 and a base image (background image) stored in advance.

When detecting that the product is placed, the identification section 32 starts identifying the product with a weighing stabilization signal from the operation control section 40 as a trigger. In the present embodiment, the identification section 32 identifies the product in the image data using the trained model of the model generation and storage section 33. The trained model identifies the product based on the feature of the product indicated by the image of the image data. In this case, when the types of products are different, such as fresh fish, prepared food, and fresh vegetables, clustering is used. The trained model may include a neural network (CNN) or a transformer used for the clustering. The trained model may further include a neural network including a plurality of layers (e.g., eight or more layers). That is, the trained model may be generated by deep learning. Further, the trained model may be prepared for each product to be handled. For example, trained models may be classified into models for meat, fresh fish, fresh vegetables, prepared food, and the like.

The identification section 32 identifies the product name of the product in the image data input from the imaging section 8 using the trained model from the model generation and storage section 33. The identification section 32 acquires an estimation result output from the neural network in response to input of the image data to the neural network of the trained model. The estimation result may include a plurality of similar products or only one product. In addition, the estimation result may include information indicating that the product has not been identified. Based on such an estimation result, the identification section 32 outputs the product name of the product placed on the weighing section 7 to the output section 34. The output section 34 outputs the product name input from the identification section 32 to the operation control section 40.

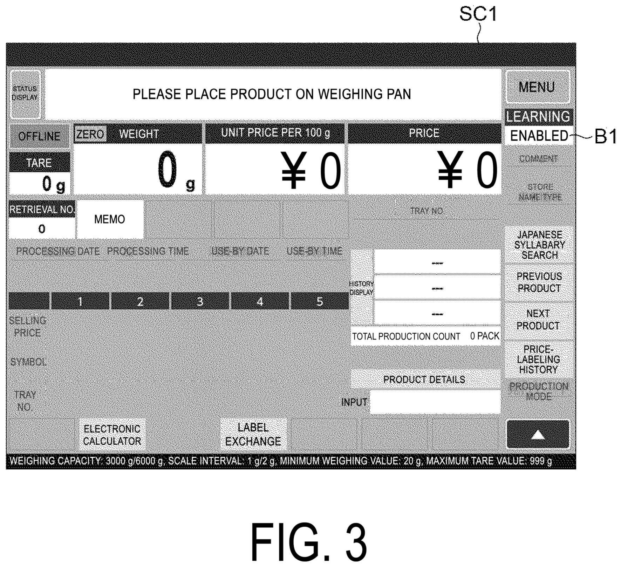

The operation control section 40 controls various operations of the weighing label producing apparatus 1. The operation control section 40 displays, for example, a guidance message as illustrated in FIG. 3 on a product information screen SC1. When the product placed on the weighing pan 7A is weighed by the weighing section 7, and the "retrieval" key is operated after a retrieval number for identifying the product is input from the operation section 4, the operation control section 40 displays product information of the product identified by the retrieval number as the product information screen SC1 as illustrated in FIG. 5(A). In FIG. 5(A), it is displayed that the product placed on the weighing section 7 is a fixed-price product and the input retrieval number is "0012". Subsequently, when the "print" key of the operation section 4 is operated, the product label LC as illustrated in FIG. 5(B) is produced.

The retrieval operation of the product (normal retrieval operation) includes, for example, input of the retrieval number unique to the product and a subsequent operation of the "retrieval" key. Since the retrieval number is registered as a number unique to each product, the product can be identified by the retrieval number. When the product is identified by inputting the retrieval number, the operation control section 40 acquires product information of the identified product from the product master of the storage section 12 and displays the product information screen SC1 as illustrated in FIG. 5(A) on the display section 5.

On the other hand, when the operator does not remember the retrieval number, the operator performs a retrieval operation in which no product is identified (temporary retrieval operation different from the normal retrieval operation) in order to cause the image recognition section 30 to identify the product. For example, "0" is input as an unregistered number, and then the "retrieval" key is pressed. Alternatively, only the "retrieval" key is pressed. Then, the operation control section 40 determines that the operation is a retrieval operation in which no product is identified, and causes the image recognition section 30 to identify the product name of the product placed on the weighing section 7.

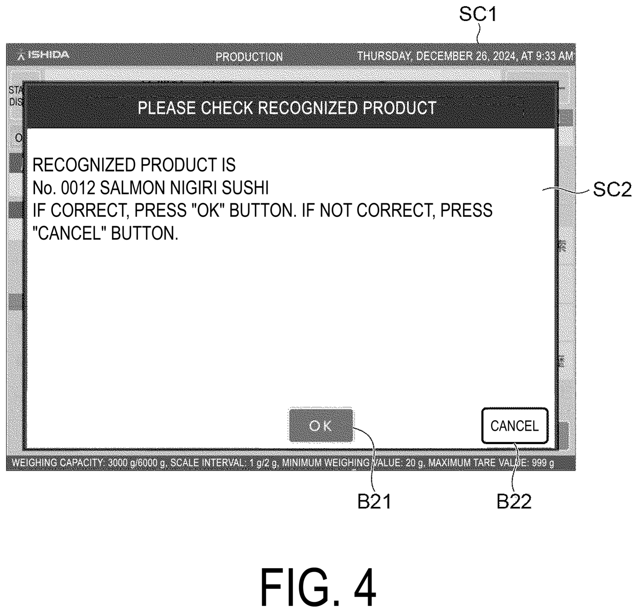

When the image recognition section 30 identifies the product name of the product placed on the weighing pan 7A, the product name is input to the operation control section 40. The operation control section 40 acquires the product information of the product from the product master based on the input product name and displays the product information on the display section 5. At this time, the operation control section 40 displays, on the display section 5, a product recognition dialog SC2 indicating that the product has been recognized, as illustrated in FIG. 4. In the product recognition dialog SC2, the retrieval number (0012 in the example illustrated in FIG. 4) and the product name (salmon nigiri sushi in the example illustrated in FIG. 4) in the product information of the product recognized by the image recognition section 30 are displayed. The product recognition dialog SC2 includes an OK button B21 operated when the operator determines that the product name identified by the image recognition section 30 is correct, and a cancel button B22 operated when the operator determines that the product name is incorrect.

When the OK button B21 is operated in the product recognition dialog SC2 of FIG. 4, the operation control section 40 determines that the product has been identified, and displays, on the display section 5, the product information screen SC1 as illustrated in FIG. 5(A). Subsequently, the operation control section 40 controls the speaker 6 to read out the product information such as the product name and the price displayed on the product information screen SC1.

In addition, when the OK button B21 is operated in the product recognition dialog SC2 of FIG. 4 and the screen is transitioned to the product information screen SC1 of FIG. 5(A), the operation control section 40 also outputs, via audio, that the product name displayed on the product information screen SC1 is the product name identified by the image recognition section 30 (for example, "Salmon nigiri sushi has been recognized by the image recognition section"). In such a state, when the operator operates, for example, the "print" key included in the operation section 4, the printing section 9 is controlled to print the product label LC as illustrated in FIG. 5(B).

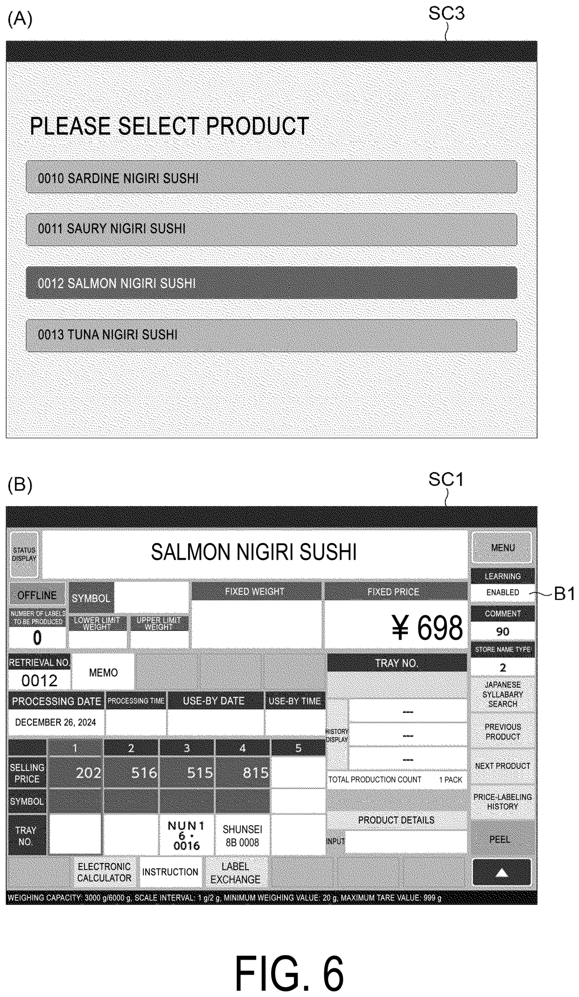

On the other hand, when the identification section 32 extracts a plurality of product candidates and reports the result to the operation control section 40, the operation control section 40 displays, on the display section 5, a product selection dialog SC3, for example, as illustrated in FIG. 6(A). At this time, the operation control section 40 may display the plurality of products, for example, in descending order of recognition score output by the image recognition section 30 (trained model).

In the example of the product selection dialog SC3 illustrated in FIG. 6(A), "product number 0010: sardine nigiri sushi", "product number 0011: saury nigiri sushi", "product number 0012: salmon nigiri sushi", and "product number 0013: tuna nigiri sushi" are displayed. These displays are configured to be selectable by the operator in the product selection dialog SC3. The product name selected by the operator is displayed with black and white inverted, and the selection can be recognized. Then, the operation control section 40 acquires product information of the selected product from the product master of the storage section 12 and displays the product information on the display section 5 as the product information screen SC1 as illustrated in FIG. 6(B). When the image recognition section 30 has not identified any product, the operation control section 40 displays, on the display section 5, the message "The product has not been recognized. Please input the retrieval number".

In the product information screen SC1 illustrated in FIG. 6(B), when a learning setting portion B1 for performing machine learning is touched, the display of the learning is switched from "enabled" to "disabled". Here, in the learning setting portion B1, image recognition is set to "enabled" as an initial value. When the image recognition is set to "enabled", the operation control section 40 outputs, as training data, the image data of the product on the weighing pan 7A and the product name of the product "salmon nigiri sushi" to the input section 31 of the image recognition section 30. The model generation and storage section 33 performs machine learning based on the training data received from the input section 31, generates a new trained model, and updates the stored model. However, the image recognition section 30 may transmit the training data to the external AI to cause the external AI to perform this machine learning, acquire the result from the external AI, and store the result in the model generation and storage section 33.

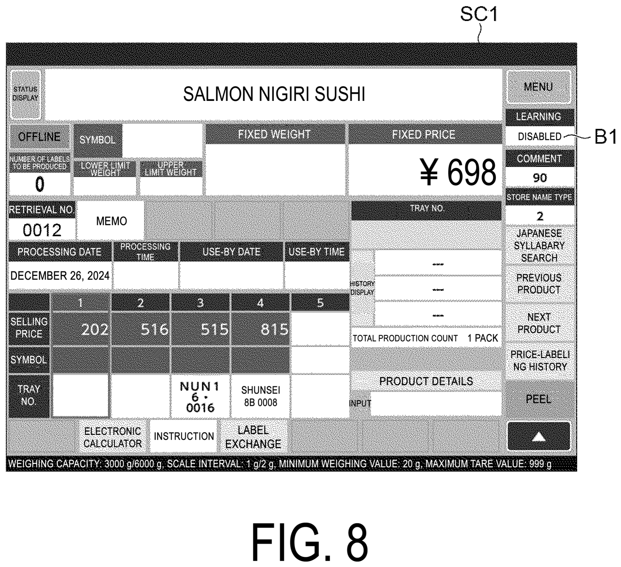

By repeating this machine learning, the recognition accuracy of the identification section 32 can be improved, and thus, only by placing "salmon nigiri sushi" on the weighing pan 7A, it is possible to display the product information screen SC1 illustrated in FIG. 6(B) without displaying a product list as illustrated in FIG. 6(A). At this stage, the learning setting portion B1 is touched to switch the display from "enabled" to "disabled" (see the learning setting portion B1 in FIG. 8). In this case, even when the model generation and storage section 33 finishes the machine learning and the external shape of "salmon nigiri sushi" changes thereafter, the identification section 32 can identify a product in image data as "salmon nigiri sushi" and display the product information screen SC1 illustrated in FIG. 6(B).

On the other hand, when a retrieval operation of a product is performed from the operation section 4, for example, when "0012" is input as a retrieval number and then the "retrieval" key is operated, the operation control section 40 acquires product information of the product name "salmon nigiri sushi" corresponding to the retrieval number "0012" from the storage section 12 and displays, on the display section 5, the product information screen SC1 as illustrated in FIG. 5(A). Subsequently, the operation control section 40 controls the speaker 6 to read out the product information such as the product name and the price displayed on the product information screen SC1.

Subsequently, when the "print" key is operated in a state where the product information screen SC1 of FIG. 5(A) or FIG. 6(B) is displayed, the operation control section 40 controls the printing section 9 to print the product label LC of "salmon nigiri sushi". As a result, the weighing label producing apparatus 1 produces the product label LC of "salmon nigiri sushi".

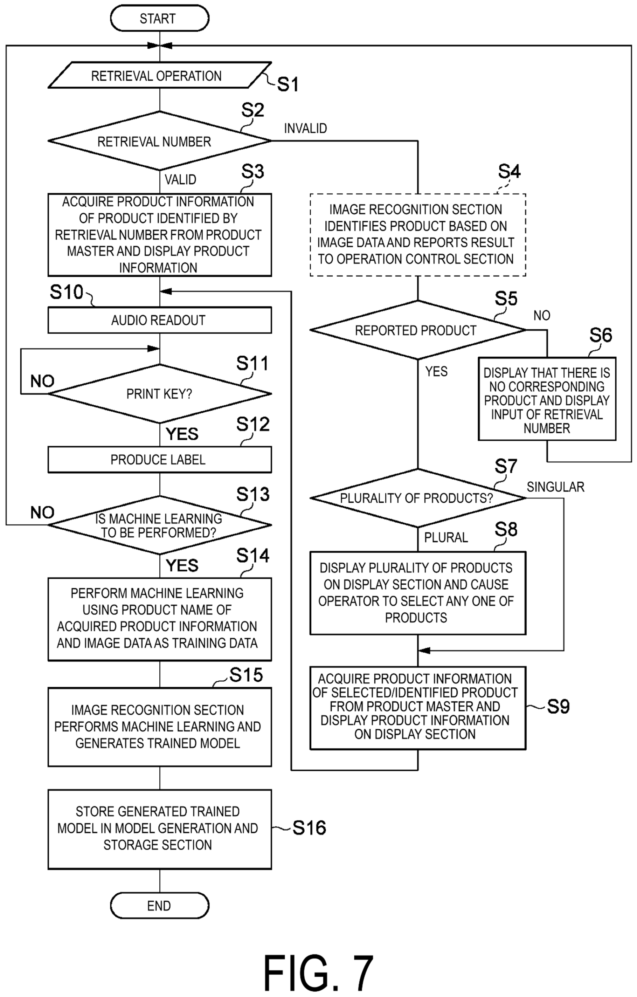

Next, an operation of the controller 10 will be described. FIG. 7 illustrates an example of an operation flow of the controller 10, and the description will be made on the assumption that image data of a product acquired by the imaging section 8 is output to the controller 10 when the product is placed on the weighing pan 7A in FIG. 1 and the weighing section 7 determines that the weighing is stable.

In FIG. 7, a retrieval operation of the product is performed in step S1. For example, "salmon nigiri sushi" is placed on the weighing pan 7A, and "0012" is input as a retrieval number from the operation section 4. Subsequently, when the "retrieval" key is pressed, the operation control section 40 determines in step S2 whether or not the retrieval number is a valid four-digit number (registered number). When the retrieval number is the valid number (registered number), the operation control section 40 proceeds to step S3, acquires product information of a product corresponding to the retrieval number "0012" from the product master of the storage section 12, and displays the product information on the display section 5. FIGS. 5(A) and 6(B) are examples of the product information screen SC1 displayed in this manner.

On the other hand, in step S1, when the operator does not remember the retrieval number of the product placed on the weighing pan 7A, the operator presses, for example, the numeric key "0" and then presses the "retrieval" key. Alternatively, the operator presses only the "retrieval" key. Then, the operation control section 40 determines in step S2 that the input retrieval number is an invalid number (unregistered number), and proceeds to step S4, and the operation control section 40 activates the image recognition section 30. That is, the identification section 32 of the image recognition section 30 identifies the product on the weighing pan 7A based on image data input from the imaging section 8, and reports the result to the operation control section 40.

When the report indicates that the product has not been identified in step S5, the operation control section 40 proceeds to step S6 and displays, on the display section 5, the message "There is no corresponding product. Please input the retrieval number". When the product has been identified, the operation control section 40 proceeds to step S7, and it is determined whether a single product or a plurality of products are identified. When the plurality of products are identified, the operation control section 40 proceeds to step S8 and displays a plurality of product names as illustrated in FIG. 6(A), and one product is selected. When the one product is selected, the operation control section 40 proceeds to step S9, acquires product information of the selected product from the product master, and displays the product information on the display section 5. In step S7, when the single product is identified, the operation control section 40 also proceeds to step S9, acquires product information of the identified product from the product master, and displays the product information on the display section 5. The product information screen SC1 of FIG. 6(B) is an example of the screen displayed in this manner.

When the product information screen SC1 of FIG. 6(B) is displayed in this manner, the operation control section 40 proceeds to step S10 and controls the speaker 6 to read out the product information such as the product name and the price displayed on the product information screen SC1. The operator checks whether the product name in the product information screen SC1 is correct based on the product information screen SC1 and the read-out product name. When the product name is correct, the operator presses the "print" key of the operation section 4 in step S11. Then, the operation control section 40 controls the printing section 9 to produce the product label LC of "salmon nigiri sushi" in step S12.

When the product label LC is produced, the operation control section 40 determines in step S13 whether the product "salmon nigiri sushi" needs to be machine-learned. Specifically, in the product information screen SC1 of FIG. 6(B), when "enabled" is displayed for learning in the learning setting portion B1, it is determined that machine learning is required, and when "disabled" is displayed for learning, it is determined that machine learning is not required.

The learning setting portion B1 determined in step S13 is included in both the product information screen SC1 when the product is identified by the retrieval operation of the product and the product information screen SC1 when the product is identified by the image recognition section 30. Thus, the recognition accuracy of the image recognition section 30 is improved by machine learning also in the case of the retrieval operation of the product.

In the learning setting portion B1 of the product information screen SC1, "enabled" is set as an initial value for learning. This is based on the finding that, at the beginning of introduction of the image recognition section 30 as an image recognition device, the recognition accuracy is not improved unless machine learning is repeated. Therefore, when one product is selected from the selection screen as illustrated in FIG. 6(A), the recognition accuracy of the image recognition section 30 is considered to be low. Thus, the operation control section 40 proceeds to step S14 and causes the image recognition section 30 to perform machine learning. That is, the operation control section 40 provides the image recognition section 30 with the image data of the product on the weighing pan 7A and the selected product name "salmon nigiri sushi" as training data.

The same also applies to a case where the product "salmon nigiri sushi" is identified by inputting the retrieval number "0012". Then, the image recognition section 30 causes the model generation and storage section 33 to perform machine learning and updates the stored trained model (step S15 and step S16). When this machine learning is repeated every time product information is acquired, the recognition accuracy of the image recognition section 30 can be improved. When image data of "salmon nigiri sushi" placed on the weighing pan 7A is input to the image recognition section 30, and only "salmon nigiri sushi" is displayed without displaying a plurality of product candidates, the learning setting portion B1 of the product information screen SC1 of FIG. 6(B) is touched. Then, the display of "enabled" for learning in the learning setting portion B1 is switched to "disabled" as illustrated in FIG. 8, and machine learning is no longer performed thereafter. FIG. 9 illustrates some of stored contents of the product master, and illustrates that, as a result of repeating machine learning, the "enabled" setting for learning in the learning setting portion B1 is switched to "disabled" for some products, for example, "nigiri sushi" and "sushi assortment" as products that do not require machine learning.

In this way, when the number of products for which learning is set to "disabled" in the learning setting portion B1 increases, the image recognition section 30 can immediately identify a corresponding product name from image data of a product on the weighing pan 7A. Thus, the weighing label producing apparatus 1 according to the present embodiment can improve the recognition accuracy of the image recognition section (image recognition device) 30 while performing a price-labeling operation.

In the weighing label producing apparatus 1 of the above embodiment, regardless of whether a product is identified by the image recognition section 30 or retrieved by the operator, the audio output device 15 reads out the product name displayed on the display section 5. Accordingly, the operator can check whether the identified product is correct.

In the weighing label producing apparatus 1 of the above embodiment, when the weighing value of a product placed on the weighing section 7 is stable, the imaging section 8 captures image data of the product. Accordingly, the image recognition section 30 can identify the product based on the image data captured at the timing when the weighing value is stable, that is, in a state where the product placed on the weighing pan 7A of the weighing section 7 is stable. This can increase the recognition accuracy when the image recognition section 30 identifies the product.

An embodiment has been described above. However, an aspect of the present invention is not limited to the embodiment described above. Various changes can be made without departing from the spirit of the invention.

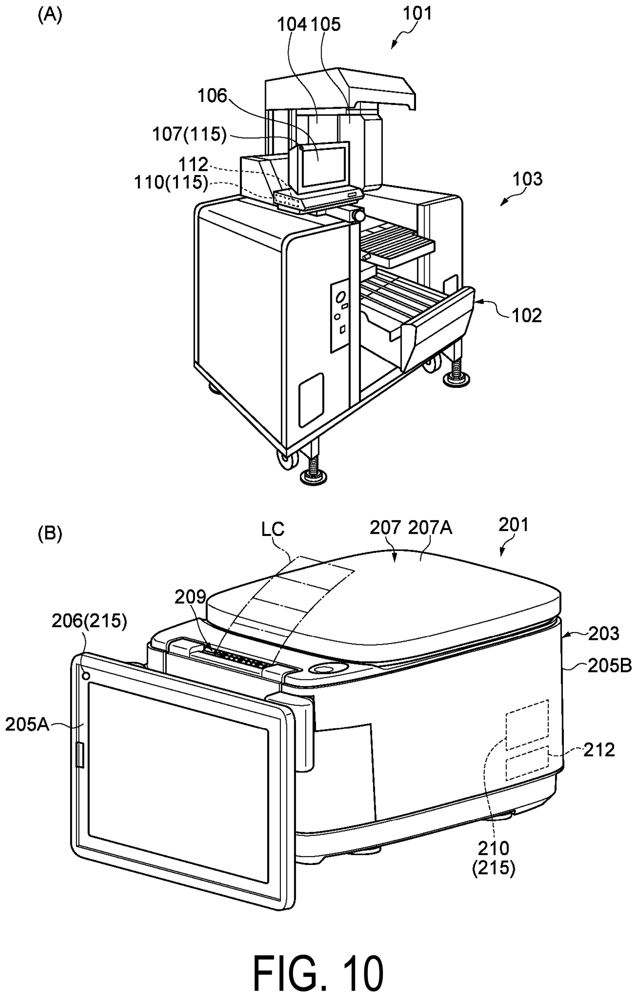

In the above embodiment, an example in which an aspect of the present invention is applied to the weighing label producing apparatus 1 as illustrated in FIG. 1 has been described, but an aspect of the present invention may be applied to a weighing, packaging, and price-labeling apparatus (product processing apparatus) 101 that weighs a product, packages the product, then produces a product label LC on which product information related to the product is printed, and affixes the label to the product, as illustrated in FIG. 10(A). The weighing, packaging, and price-labeling apparatus 101 includes a weighing section 102, a packaging section 103, a printing section 104, an affixing section 105, a display operation section 106 constituted by a touch panel, a speaker 107, a controller (control section) 110, and a storage section 112. The speaker 107 and the controller 110 according to a modification constitute an audio output device 115.

Further, as illustrated in FIG. 10(B), an aspect of the present invention may be applied to a face-to-face printer-equipped electronic scale 201 including a clerk-side operation section 205A and a customer-side operation section 205B. The electronic scale 201 includes a main body case 203, the clerk-side operation section 205A and the customer-side operation section 205B constituted by touch panels, a speaker 206, a weighing section 207 including a weighing pan 207A, a label producing section 209 that produces a product label LC, a controller (control section) 210, and a storage section 212. The speaker 206 and the controller 210 according to a modification constitute an audio output device 215. Further, the product processing apparatus may be configured as a label producing apparatus not including the weighing section 207. In the electronic scale 201 and the label producing apparatus, the weighing pan 207A serves as a product placement section, and the imaging section is disposed above the product placement section.

### Reference Signs List

1 Weighing label producing apparatus (product processing apparatus), 5 Display section, 6 Speaker, 7 Weighing section, 7A Weighing pan, 8 Imaging section, 9 Printing section, 10, 110, 210 Controller (control section), 12 Storage section, 15 Audio output device, 30 Image recognition section (image recognition device), 31 Input section, 32 Identification section, 33 Model generation and storage section, 34 Output section, 40 Operation control section, 101 Weighing, packaging, and price-labeling apparatus (product processing apparatus), 201 Electronic scale (product processing apparatus), LC Product label, SC1 Product information screen, SC2 Product recognition dialog, SC3 Product selection dialog, SC4 Product master display screen.

## Claims

1. A product processing apparatus (1) comprising:
a control section (10) configured to acquire, from a product master, product information of a product identified by a retrieval operation of the product or a product identified by an image recognition device (30), and to output the product information on a display section (5), wherein
the control section (10) activates the image recognition device (30) when a retrieval operation in which the product is not identified is performed.

2. The product processing apparatus (1) according to claim 1, further comprising:
an audio output device (15) configured to read out at least a product name included in the product information when the product information related to the product is output to the display section (5).

3. The product processing apparatus (1) according to claim 1 or 2, wherein
when a plurality of the products are identified by the image recognition device (30), the control section (10) is configured to output the plurality of identified products on the display section (5), and in response to selection of one product from the plurality of outputted products, the control section (10) is further configured to output product information of the selected product to the display section (5).

4. The product processing apparatus (1) according to any of claim 1 to 3, further comprising:
a weighing section (7) configured to weigh the product; and
a label producing section configured to produce a label printed with a weight weightof the product weighed by the weighing section (7) and the product information of the product acquired from the product master.

5. The product processing apparatus (1) according to any one of claims 1 to 4, further comprising:
an imaging section (8) configured to capture an image the product, wherein
the control section (10) is further configured to:
output to the image recognition device (30), as training data, image data of the product captured by the imaging section (8) and a first product name of the product identified by the retrieval operation of the product or a second product name of the product identified by the image recognition device (30) and
cause the image recognition device (30) to perform machine learning.

6. The product processing apparatus (1) according to any one of claims 1 to 5, wherein
the control section (10) is configured to have the image recognition device (30) and to identify the product information of the product based on the product master and an image recognition result of the image recognition device (30).

7. The product processing apparatus (1) according to any one of claims 1 to 6, wherein
the control section (10) is configured to receive the retrieval operation from an operation section (4) and to identify the product information of the product based on the product master and the retrieval operation received from the operation section (4).
